# EUROPÄISCHE PATENTSCHRIFT

(11) **EP 0 860 262 B1**
(45) Veröffentlichungstag und Bekanntmachung des Hinweises auf die Patenterteilung: **24.10.2001**
(21) Anmeldenummer: 98100384.1
(22) Anmeldetag: 12.01.1998
(51) Int. Cl.: B29C 44/34, C08J 9/22

(54) **Verfahren zum Nachschäumen von preexpandierten polyolefinischen Partikeln**
Process for foaming pre-expanded polyolefin particles
Procédé pour mousser des particules de polyolefine préexpansées

(30) Priorität: 21.02.1997 DE 19706884
(43) Veröffentlichungstag der Anmeldung: 26.08.1998
(73) Patentinhaber: Gefinex Polymerschäume GmbH, 33803 Steinhagen (DE)
(72) Erfinder: Wirobski, Reinhard, 45768 Marl (DE); Günzel, Bernd, Dr., 45721 Haltern (DE)
(74) Vertreter: Kaewert, Klaus

(56) Entgegenhaltungen:
- EP-A- 0 359 032
- EP-A- 0 564 781
- EP-A- 0 734 829
- DE-A- 2 734 834
- DE-A- 4 429 844
- FR-A- 2 497 814
- US-A- 3 821 342

## Beschreibung

Gegenstand der Erfindung ist ein Verfahren, mit dem polyolefinische Schaumperlen hoher Schüttdichte in Schaumperlen niedriger Schüttdichte übergeführt werden können.

Polyolefinische Partikelschaumstoffe sind bekannt; sie können nach einer Vielzahl von Verfahren hergestellt werden, denen gemeinsam ist, daß eine wäßrige Granulatdispersion unter Druck und in Gegenwart eines Treibmittels erhitzt wird, wonach die heiße Dispersion durch eine Düse in einen Niederdruckraum entlassen wird. Die Granulate schäumen hier auf, wobei die Expansionsrate in erster Linie durch die Art des Granulats, die Verschäumungstemperatur sowie die Art und Menge des Treibmittels bestimmt wird.

Verglichen mit der Herstellung von Polystyrol-Partikelschaum leidet die Herstellung von Polyolefin-Partikelschaum an einem gravierenden Nachteil: eine Speicherung von Treibmittel im Granulat ist nämlich so gut wie nicht möglich. Während daher Polystyrolperlen, die mit einem flüchtigen Treibmittel beladen sind, problemlos transportiert und zu Schaum verarbeitet werden können, gelingt dies mit Polyolefinen nicht. Hier muß von Anfang an auf die endgültige Schüttdichte geschäumt werden, was hohe Lager- und Transportkosten verursacht. Zwar gibt es Möglichkeiten, durch gezielte Herstellung von geschrumpften Schaumperlen zunächst einen Schaum von verhältnismäßig hoher Schüttdichte herzustellen, worauf beim Verarbeiter vor der Verarbeitung durch Druckbeladung und Entspannung zunächst die Schrumpfung wieder aufgehoben wird (DE-A-39 22 207; EP-A-0 453 836) oder in einem verbesserten Verfahren die Partikel nach Druckbeladung unter weitgehender Beibehaltung des Innendrucks unmittelbar zu Formteilen niedriger Dichte verarbeitet werden (EP-A-0 734 829). Die so erzielbare Volumenreduktion ist aber nur ein erster Schritt zur Verringerung der Lager- und Transportkosten.

Somit stellte sich die Aufgabe, möglichst schwere Schaumgranulate herzustellen, die durch geeignete Nachbehandlungsmaßnahmen zu leichteren Schaumpartikeln nachgeschäumt werden können.

Die Aufgabe wird erfindungsgemäß durch ein Verfahren gelöst, bei dem angeschäumtes Polyolefingranulat mit einer Schüttdichte von 20 bis 450 g/l bei 2 bis 25 bar, vorzugsweise 3 bis 10 bar und einer Temperatur von Tₘ -150 °C bis Tₘ -40 °C während einer Zeit von 1 bis 48 h, vorzugsweise 5 bis 20 h, mit einem inerten Gas beladen wird, worauf die druckbeladenen Schaumpartikel kontinuierlich oder diskontinuierlich in eine Vorrichtung überführt werden, wo eine Wirbelschicht erzeugt wird, wobei die Partikel bei einer Temperatur zwischen Tₘ -75 °C und Tₘ +20 °C weiter aufschäumen (Post-Expansion).

In einer Ausführungsform der Erfindung werden hierbei die druckbeladenen Schaumpartikel über eine Schleuse in eine drucklose, auf eine Temperatur zwischen Tₘ -75 °C und Tₘ +20 °C temperierte Vorrichtung überführt, wonach die aufgeschäumten Partikel entnommen werden. "Drucklos" bedeutet hierbei, daß in dieser Vorrichtung in etwa Atmosphärendruck herrscht.

In einer weiteren Ausführungsform der Erfindung werden die druckbeladenen Schaumpartikel in einer druckfesten Vorrichtung auf eine Temperatur zwischen Tₘ -75 °C und Tₘ +20 °C erhitzt und anschließend die Partikel in eine unter Atmosphärendruck stehende Umgebung ausgeschleust.

Als Polyolefin sind beispielsweise Propylenpolymere wie Propylen-Ethylen- oder Propylen-Butylen-Randomcopolymere, Random-Terpolymere von Ethylen, Propylen und Buten-1, Ethylen-Propylen-Blockcopolymere und Homopolypropylen, Ethylenpolymere wie Polyethylen niedriger, mittlerer oder hoher Dichte, lineares Polyethylen niedriger Dichte, Ethylen-Vinylacetat-Copolymere, Ethylen-Methylmethacrylat-Copolymere, Ionomere oder andere Polyolefine wie Polybuten-1 geeignet. Bevorzugt wird ein Ethylen-Propylen-Randomcopolymeres mit 1 bis 15 Gew.-% Ethylen eingesetzt.

Bei der Pre-Expansion liegen diese Polymeren als diskrete Partikel vor. Sie haben vorzugsweise einen mittleren Teilchendurchmesser von 0,5 bis 5 mm. Um eine gleichmäßige Schäumung zu erzielen, können sie gegebenenfalls, dem Stand der Technik entsprechend, einen Füllstoff enthalten, der als Keimbildner wirkt.

Als Dispersionsmittel wird vorzugsweise Wasser verwendet. Geeignet sind jedoch beispielsweise auch Alkohole wie Methanol oder Ethanol.

Um ein Agglomerieren zu verhindern, kann der Mischung von Polymerteilchen und Dispersionsmittel ein feinteiliges Dispergierhilfsmittel und/oder eine oberflächenaktive Verbindung zugesetzt werden. Beispiele hierfür sind Calciumphosphat, basisches Magnesiumcarbonat, basisches Zinkcarbonat, Calciumcarbonat, Aluminiumoxid, Bariumsulfat, Talkum, Alkylbenzolsulfonate, Paraffinsulfonate oder Ethoxylate.

Zur Einstellung der Dichte der Schaumperlen ist es zweckmäßig, zusätzlich ein flüchtiges Treibmittel zuzugeben. Geeignete Treibmittel sind aus dem Stand der Technik bekannt, beispielsweise können gesättigte aliphatische Kohlenwasserstoffe wie Ethan, Propan, n-Butan, i-Butan, Pentan oder Hexan, alicyclische Kohlenwasserstoffe wie Cyclopentan oder Cyclohexan, halogenierte Kohlenwasserstoffe wie Trichlormonofluormethan, Dichlordifluormethan, Dichlortetrafluorethan, Trichlortrifluorethan, Dichlormonofluormethan, Methylchlorid, Methylenchlorid oder Ethylchlorid sowie anorganische Gase wie beispielsweise Kohlendioxid oder Stickstoff, jeweils einzeln oder als Mischung, verwendet werden.

Wird kein flüchtiges Treibmittel zugegeben, so wirkt bereits alleine das Dispersionsmittel als Treibmittel. Auf diese Weise werden zwar nur mäßige bis mittlere Expansionsraten erzielt, was aber bei der vorliegenden Erfindung gerade angestrebt wird.

Die Dispersion wird entsprechend dem Stand der Technik erhitzt und dann durch eine Entspannungsdüse in einen Niederdruckraum entlassen, wobei die Partikel aufschäumen bzw. ihnen eine Zellstruktur aufgeprägt wird.

Geeignete Verfahren zur Herstellung von polyolefinischem Partikelschaum sind beispielsweise in EP-A-0 053 333, EP-A-0 630 935 und EP-A-0 646 619 beschrieben.

Im Rahmen dieser Erfindung wird der Kristallitschmelzpunkt Tₘ anhand einer DSC-Messung bestimmt. Hierbei wird eine Probe des Polyolefins mit einer Geschwindigkeit von 20 °C/min auf 210 °C aufgeheizt, dann mit einer Geschwindigkeit von 20 °C/min auf -30 °C abgekühlt und anschließend wieder mit einer Geschwindigkeit von 20 °C/min aufgeheizt. Das Maximum des hierbei auftretenden Peaks gibt Tₘ an.

Darüber hinaus ist bekannt, daß Polyolefinschaumperlen zusätzlich einen Hochtemperaturschmelzpeak besitzen können, der auf sekundäre Kristalle zurückgeführt wird (EP-A-0 123 144; EP-A-0 164 855; EP-A-0 168 954). Im Rahmen der vorliegenden Erfindung ist die Verwendung derartiger angeschäumter Granulate bevorzugt, wobei besonders bevorzugt die Druckbeladung mit dem inerten Gas bei Tₘᵢₙ -125 °C bis Tₘᵢₙ -60 °C und die Post-Expansion im Bereich von Tₘᵢₙ -35 °C bis Tₘᵢₙ +10 °C durchgeführt wird. Tₘᵢₙ ist hierbei das Minimum zwischen erstem und zweitem Peak der ersten Aufheizkurve der DSC-Messung. Bei einem Ethylen-Propylen-Randomcopolymer mit einen Ethylengehalt von ca. 3,5 Gew.-% liegt Tₘᵢₙ im Bereich von etwa 150 °C bis etwa 156 °C.

Das für die Druckbeladung verwendete inerte Gas ist beispielsweise Stickstoff, Luft oder CO₂

Für die Post-Expansion geeignete Vorrichtungen sind solche, in denen eine Wirbelschicht entweder mechanisch oder pneumatisch erzeugt werden kann. Für eine mechanisch erzeugte Wirbelschicht kann beispielsweise ein Rührbehälter, ein Schaufeltrockner oder ein Taumeltrockner verwendet werden, während für eine pneumatisch erzeugte Wirbelschicht ein Wirbelbett, ein Stromrohrtrockner oder ähnliches eingesetzt werden kann.

In der einen Ausführungsform ist die für die Post-Expansion verwendete Vorrichtung druckfest ausgelegt. Dadurch wird ein Beheizen des druckbeladenen, angeschäumten Granulats, z. B. mit Sattdampf, ermöglicht. Je nach Temperatur betragen hierbei die Verweilzeit der angeschäumten Granulate 30 bis 300 Sekunden und der Dampfdruck 1,7 bis 5,5 bar. Nach dieser Zeit werden die angeschäumten und erwärmten Granulate in eine unter Atmosphärendruck stehende Umgebung ausgeschleust.

Überraschenderweise lassen sich durch das erfindungsgemäße Verfahren angeschäumte Granulate zu Schaumpartikeln niedriger Schüttdichte weiter aufblähen. Somit ist es möglich, mit einer Type an schwerem Granulat einen sehr großen Schüttdichtebereich abzudecken. Bei Bedarf kann darüber hinaus der Schritt der Post-Expansion wiederholt werden, um eine weitere Absenkung der Schüttdichte zu erreichen. Dies kann insbesondere bei Verwendung angeschäumter Granulate mit einer Schüttdichte oberhalb von 350 g/l sinnvoll sein.

Die erfindungsgemäß hergestellten Schaumperlen zeichnen sich durch eine glatte, glänzende Oberfläche aus. Darüber hinaus werden bei Verwendung von zylinderförmigen Granulaten weitgehend kugelförmige Schaumpartikel erhalten. Die Schaumperlen können nach allen Methoden des Standes der Technik zu Formteilen verarbeitet werden.

Im folgenden wird die Erfindung beispielhaft erläutert. In allen Beispielen werden angeschäumte Granulate verwendet, die ausgehend vom jeweils gleichen Rohgranulat gemäß dem Stand der Technik hergestellt wurden.

### Beispiel 1:

Ein angeschäumtes Granulat eines Ethylen-Propylen-Randomcopolymers mit Tₘ = 147 °C und Tₘᵢₙ = 153 °C sowie mit einer Schüttdichte von 21 g/l wird 20 h bei 30 °C unter einem Druck von 4,6 bar behandelt. Anschließend wird der Druckbehälter entspannt und das druckbeladene angeschäumte Granulat portionsweise auf ein Wirbelbett mit einer Lufttemperatur von 140 °C aufgegeben. Der Volumenstrom an Luft wird so eingestellt, daß eine intensive Verwirbelung sichergestellt ist. Am Kopf der Apparatur reichern sich die nachgeschäumten, leichteren Schaumpartikel an, da sie aufgrund ihres größeren Volumens einen größeren Auftrieb besitzen; sie fließen anschließend über ein Wehr aus der Wirbelschichtapparatur, werden ausgeschleust und gekühlt. Die endgültige Schüttdichte beträgt 14 g/l; siehe Tabelle 1.

### Beispiel 2:

Wie Beispiel 1, ausgehend von angeschäumtem Granulat mit einer Schüttdichte von 53 g/l. Die Verfahrensparameter und das Ergebnis sind in der Tabelle 1 wiedergegeben.

### Beispiel 3:

Wie Beispiel 1, ausgehend von angeschäumtem Granulat mit einer Schüttdichte von 83 g/l. Die Verfahrensparameter und das Ergebnis sind in der Tabelle 1 wiedergegeben.

### Beispiel 4:

Ein angeschäumtes Granulat mit einer Schüttdichte von 210 g/l wird in einem druckfesten Reaktor 10 h bei 80 °C unter einem Druck von 6 bar gehalten, wobei der Inhalt durchmischt wird. Nach Ablauf dieser Zeit wird der Reaktor entspannt und mit Sattdampf beaufschlagt. Der Dampfdruck von 5,1 bar, entsprechend einer Temperatur von 153 °C, wird über 4 Minuten gehalten. Anschließend wird der Reaktor entspannt und der nachexpandierte Partikelschaum ausgetragen.

**Tabelle 1**

| Verfahrensparameter und Ergebnisse | | | | | | | |
|---|---|---|---|---|---|---|---|
| **Beispiel** | **Schüttdichte (g/l)** | **Nachbehandlung** | | | **Nachschäumung** | | |
| | | **T (°C)** | **P (bar)** | **t (h)** | **T (°C)** | **t (min)** | **Schüttdichte (g/l)** |
| 1 | 21 | 30 | 4,6 | 20 | 140 | 1 | 14 |
| 2 | 53 | 30 | 4,6 | 20 | 145 | 1 | 25 |
| 3 | 83 | 50 | 5,8 | 12 | 160 | 3 | 24 |
| 4 | 210 | 80 | 6 | 10 | 153 | 4 | 63 |

## Patentansprüche

1. Verfahren zum Nachschäumen von angeschäumtem Polyolefingranulat, wobei Polyolefinschaumpartikel mit einer Schüttdichte von 20 bis 450 g/l bei 2 bis 25 bar und einer Temperatur von Tₘ -150 °C bis Tₘ -40 °C während einer Zeit von 1 h bis 48 h mit einem inerten Gas beladen werden, worauf die druckbeladenen Schaumpartikel kontinuierlich oder diskontinuierlich in eine Vorrichtung überführt werden, wo eine Wirbelschicht erzeugt wird, wobei die Partikel bei einer Temperatur zwischen Tₘ -75 °C und Tₘ +20 °C weiter aufschäumen.

2. Verfahren gemäß Anspruch 1,
**dadurch gekennzeichnet,**
**daß** die druckbeladenen Schaumpartikel über eine Schleuse in eine drucklose, auf eine Temperatur zwischen Tₘ -75 °C und Tₘ +20 °C temperierte Vorrichtung überführt werden, wonach die aufgeschäumten Partikel entnommen werden.

3. Verfahren gemäß Anspruch 1,
**dadurch gekennzeichnet,**
**daß** die druckbeladenen Schaumpartikel in einer druckfesten Vorrichtung auf eine Temperatur zwischen Tₘ -75 °C und Tₘ +20 °C erhitzt werden und anschließend die Partikel in eine unter Atmosphärendruck stehende Umgebung ausgeschleust werden.

4. Verfahren gemäß einem der vorhergehenden Ansprüche,
**dadurch gekennzeichnet,**
**daß** die Beladung mit dem inerten Gas bei 3 bis 10 bar während einer Zeit von 5 bis 20 h erfolgt.

5. Verfahren gemäß einem der vorhergehenden Ansprüche,
**dadurch gekennzeichnet,**
**daß** das Polyolefin ein Ethylen-Propylen-Randomcopolymeres mit 1 bis 15 Gew.-% Ethylen ist.

6. Verfahren gemäß einem der vorhergehenden Ansprüche,
**dadurch gekennzeichnet,**
**daß** die Polyolefinschaumpartikel einen Hochtemperaturschmelzpeak besitzen.

7. Verfahren gemäß Anspruch 6,
**dadurch gekennzeichnet,**
**daß** die Beladung mit dem inerten Gas bei Tₘᵢₙ -125 °C bis Tₘᵢₙ -60 °C und die weitere Aufschäumung im Bereich von Tₘᵢₙ -35 °C bis Tₘᵢₙ +10 °C durchgeführt wird, wobei Tₘᵢₙ das Minimum zwischen erstem und zweitem Peak der ersten Aufheizkurve der DSC-Messung ist.

## Claims

1. Method for the post-expansion of pre-expanded polyolefin granules, wherein an inert gas is applied to polyolefin foam particles having a bulk density of from 20 to 450 g/l at from 20 to 25 bar and a temperature of from Tₘ-150°C to Tₘ-40°C for a period of from 1 h to 48 h, whereupon the pressurised foam particles are transferred continuously or in batches into a device where a fluidised bed is produced, wherein the particles expand further at a temperature of between Tₘ-75°C to Tₘ+20°C.

2. Method according to Claim 1, **characterised in that** the pressurised foam particles are transferred through an airlock into an unpressurised device regulated to a temperature of between Tₘ-75°C and Tₘ+20°C, after which the expanded particles are removed.

3. Method according to Claim 1, **characterised in that** the pressurised foam particles are heated to a temperature of between Tₘ-75°C and Tₘ+20°C in a pressure-tight device, and then the particles are discharged into an environment which is at atmospheric pressure.

4. Method according to one of the preceding claims, **characterised in that** the inert gas is applied at from 3 to 10 bar for a period of from 5 h to 20 h.

5. Method according to one of the preceding claims, **characterised in that** the polyolefin is an ethylenepropylene random copolymer having from 1 to 15% by weight of ethylene.

6. Method according to one of the preceding claims, **characterised in that** the polyolefin foam particles have a high-temperature melting peak.

7. Method according to Claim 6, **characterised in that** the inert gas is applied at from Tₘᵢₙ-125°C to Tₘᵢₙ-60°C and the further expansion is carried out in the range of from Tₘᵢₙ-35°C to Tₘᵢₙ+10°C, Tₘᵢₙ being the minimum between the first and second peaks of the first heating curve of the DSC measurement.

## Revendications

1. Procédé de remoussage de granulat de polyoléfine moussé, des particules de mousse de polyoléfine, d'une masse volumique en vrac de 20 à 450 g/l étant chargés avec un gaz inerte, à une pression de 2 à 25 bar et sous une température Tₘ -150°C jusqu'à Tₘ -40°C, pendant une durée de 1 h à 48 h, suite à quoi les parties de mousse chargées sous pression sont transférées, de façon continue ou discontinue, dans un dispositif où est générée une couche tourbillonnante ou lit fluidisé, les particules continuant à mousser, à une température comprise entre Tₘ -75°C et Tₘ +20°C.

2. Procédé selon la revendication 1, **caractérisé par le fait que** les particules de mousse chargées sous pression sont transférés, par pressage dans un sas, dans un dispositif sans pression, régulé à une température comprise entre Tₘ -75°C et Tₘ +20°C, suite à quoi les particules moussées sont prélevés.

3. Procédé selon la revendication 1, **caractérisé par le fait que** les particules de mousse chargées sous pression sont chauffés, dans un dispositif résistant à la pression, à une température comprise entre Tₘ -75°C et Tₘ +20°C, puis les particules sont extraites par le sas, pour passer dans une ambiance placée à la pression atmosphérique.

4. Procédé selon l'une des revendications précédentes, **caractérisé par le fait que** le chargement par un gaz inerte se fait à une pression de 3 à 10 bar, pendant une durée de 5 h à 20 h.

5. Procédé selon l'une des revendications précédentes, **caractérisé par le fait que** la polyoléfine est un copolymère aléatoire éthylène-propylène, comportant de 1 à 15 % en poids d'éthylène.

6. Procédé selon l'une des revendications précédentes, **caractérisé par le fait que** les particules de mousse de polyoléfine ont un pic de fusion à haute température.

7. Procédé selon la revendication 6, **caractérisé par le fait que** le chargement par le gaz inerte est effectué à Tₘᵢₙ -125°C jusqu'à Tₘᵢₙ -60°C et la continuation du moussage est effectuée dans la plage de Tₘᵢₙ -35°C à Tₘᵢₙ +10°C, Tₘᵢₙ étant le minimum entre le premier et le deuxième pic de la première courbe de chauffage de mesure DSC.
